# EUROPEAN PATENT APPLICATION

(11) **EP 4 170 868 A1**
(43) Date of publication of application: **26.04.2023**
(21) Application number: 22203615.4
(22) Date of filing: 25.10.2022
(51) Int. Cl.: H02K 1/02, H02K 1/24, H02K 1/276, H02K 15/02

(54) **SYNCHRONOUS RELUCTANCE MOTORS WITH ENHANCED SALIENCY RATIO**

(30) Priority: 25.10.2021 US 202117509967
(71) Applicant: ABB SCHWEIZ AG, 5400 Baden (CH)
(72) Inventor: PERIGO, Elio Alberto, Wendell, North Carolina 27591 (US); TREMELLING, Darren D., Apex, North Carolina 27502 (US); MEDLIN, Graham L., Durham, North Carolina 27713 (US); RAKUFF, Stefan, Garner, North Carolina 27529 (US)
(74) Representative: Maiwald GmbH

(57) **Abstract**

A rotor of a synchronous reluctance motor may include: a plurality of laminations forming a stack, each lamination including: two parallel surfaces and a perimeter that define the lamination and a direction of stacking the laminations that is perpendicular to the parallel surfaces, the lamination at least partially filled with a magnetically soft electrical conductor and at least one cavity encircled by the conductor and extending from a first to a second surface of the two parallel surfaces, the conductor forming at least one bridge at the perimeter of the lamination from one side of the at least one cavity to another side of the at least one cavity. A value of a magnetic property and a value of a mechanical property of the at least one bridge differs from a value of the magnetic property and a value of the mechanical property of the conductor material.

## Description

### BACKGROUND

Synchronous reluctance machines require the use of magnetic flux barriers to create magnetic anisotropy in the rotor construction to guarantee proper motor operation. Rotors may include a plurality of laminations that are stacked in the axial direction of the rotor. Because of the design of the rotor, the lamination may contain bridges, which may not contribute to the operational performance of the machine. Instead, a bridge may act as loss point and, because of the diminutive dimension of a bridge, may constitute a mechanical failure point. However, bridges may be needed for mechanical strength of the rotor to withstand centripetal loads.

### BRIEF SUMMARY

One or more embodiments of the present invention may provide a rotor of a synchronous reluctance motor. The rotor may include: a plurality of laminations forming a stack, each lamination including: two parallel surfaces and a perimeter that define the lamination and a direction of stacking the plurality of laminations that is perpendicular to the two parallel surfaces, the lamination being at least partially filled with a first material comprising a magnetically soft electrical conductor and at least one cavity encircled by the first material and extending from a first surface of the two parallel surfaces to a second surface of the two parallel surfaces, the first material forming at least one bridge at the perimeter of the lamination from one side of the at least one cavity to another side of the at least one cavity, wherein: a value of a magnetic property of the at least one bridge differs from a value of the magnetic property of a remainder of the first material, and a value of a mechanical property of the at least one bridge differs from a value of the mechanical property of the remainder of the first material.

Further, one or more embodiments of the present invention may provide a method of increasing the saliency ratio of a rotor of a synchronous reluctance motor by modifying at least one mechanical property and at least one magnetic property of at least one region of the rotor, the rotor comprising a stack of a plurality of laminations, the laminations stacked in an axial direction of the rotor, each lamination comprising: two parallel surfaces and a perimeter that define the lamination, the parallel surfaces being perpendicular to an axial direction of the rotor, and at least the perimeter of each lamination is identical to the perimeter of every other lamination; the lamination being at least partially filled with a first material comprising a magnetically soft electrical conductor and at least one cavity encircled by the first material and extending from a first surface of the two parallel surfaces to a second surface of the two parallel surfaces, the first material forming at least one bridge at the perimeter of the lamination from one side of the at least one cavity to another side of the at least one cavity. The method may comprising: forming the laminations of the plurality of laminations from at least one sheet of the first material; stacking the laminations in the axial direction of the rotor; and plastically deforming the at least one bridge in each lamination of at least two laminations of the plurality of laminations by applying compressive stress simultaneously to the at least one bridge in each lamination of the at least two laminations, wherein the applied compressive stress is greater than or equal to a yield strength of the first material and less than or equal to an ultimate tensile strength of the first material.

### BRIEF DESCRIPTION OF THE SEVERAL VIEWS OF THE DRAWINGS

FIG. 1 shows a perspective view of a rotor stack in accordance with one or more embodiments.
FIG. 2A shows a perspective view of an experimental setup for enhancing the saliency ratio of a rotor in accordance with one or more embodiments.
FIG. 2B shows a perspective view of a system for enhancing the saliency ratio of a rotor in accordance with one or more embodiments.
FIG. 3 shows a lamination modification in accordance with one or more embodiments.
FIG. 4A shows a finite element analysis of von Mises stress as a function of rotational speed for a rotor in accordance with one or more embodiments.
FIG. 4B shows a finite element analysis of radial deflection of a lamination as a function of rotational speed in accordance with one or more embodiments.
FIG. 5A shows magnetic permeability as a function of true deformation in accordance with one or more embodiments.
FIG. 5B shows hysteresis curves in accordance with one or more embodiments.
FIG. 6 shows a flowchart in accordance with one or more embodiments.

### DETAILED DESCRIPTION

One or more embodiments of the present disclosure may address modification of mechanical and magnetic properties of synchronous reluctance rotors to enhance the saliency ratio of the rotors. The saliency ratio (Iq/Id) may be defined as the inductance ratio between the two magnetic directions of the rotor, that is, between the direct (d) axis induction (Id) and the quadrature (q) axis induction (Iq). Enhancing the saliency ratio may result in superior speed and torque capabilities. In one or more embodiments, the modification may be local, applying to one or more parts of a rotor, but not all of the rotor.

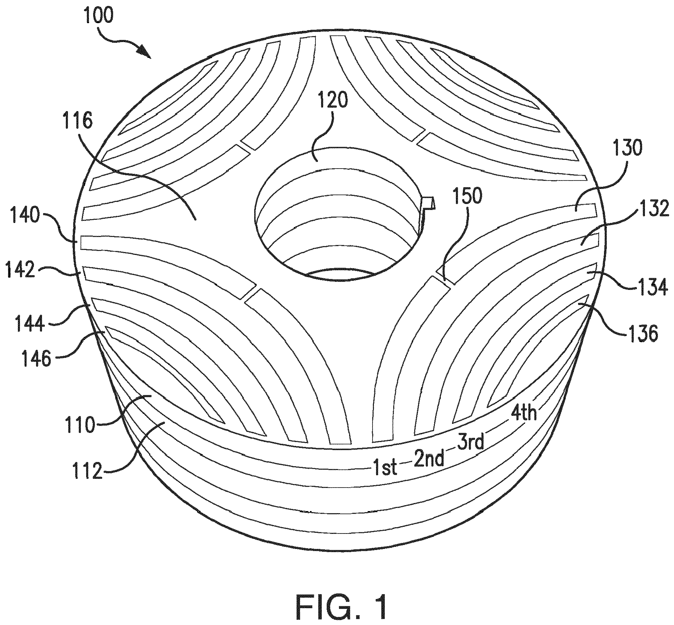

Referring to FIG. 1, a rotor stack 100 of a synchronous reluctance motor may include multiple laminations 110, 112. In the example shown, the lamination has four poles and four magnetic flux barriers per pole. The laminations may be formed from sheets of material 116. The material is a magnetically soft electrical conductor. For example, the material 116 may be an electrical steel or alloys of the type Fe-Si, Fe-Ni, Fe-Co, Fe-Co-V, Fe-Ni-Si, Fe-P, Fe-Si-P, and the like. Though references to material 116 herein may be primarily to electrical steel, it will be understood that other materials such as those just mentioned could also be used. The material 116 may include more than 0.05 weight percent carbon, but this is not a requirement. The material 116 may include 0.4 weight percent or less of nitrogen, although this is not a requirement. In some cases, the material 116 may include 0.1 weight percent or less of nitrogen. The top and bottom of the sheets may be parallel surfaces, so the laminations may have an upper and a lower surface that are parallel to each other. Laminations 110, 112 may range in thickness from 0.025 to 2.00 mm, though thicknesses outside this range are also possible. However, for a particular rotor 100, the laminations 110, 112 each have the same thickness. The laminations 110, 112 may be stacked in the thickness direction, which is the same as the axial direction of the rotor 100. Each lamination 110, 112 includes an opening 120 for receiving the rotor 100 shaft. Each lamination 110, 112 may have cavities (or slots) 130, 132, 134, 136 that may serve as magnetic flux barriers. These cavities 130, 132, 134, 136 may be formed in the shape of an arc, though other shapes may also be employed. To provide mechanical support for the laminations 110, 112, there may be bridges and webs near the cavities 130, 132, 134, 136. Bridges and webs connected barriers, providing mechanical stiffness for proper rotor operation A bridge 140, 142, 144, 146 may be located adjacent to a cavity 130, 132, 134, 136 at the perimeter of the lamination 110, 112 and may stretch from one side of a cavity to the opposite side. A web 150 traverses between a pair of cavities.

The cavities 130, 132, 134, 136 may be empty or partially or completed filled with a ferrimagnetic or ferromagnetic material. One example of a ferrimagnetic material is ferrite. An example of ferromagnetic material is Nd-Fe-B. The cavities may be filled with a mixture of ferrimagnetic or ferromagnetic material and a polymer.

It may be of technical interest to decouple electromagnetic and mechanical responses in the bridges. On one hand, it may be desirable to enhance the mechanical performance of the bridges. On the other hand, it may be of relevance to mitigate the magnetic response of bridges, i.e. to reduce the local magnetic permeability of the material at the bridges.

The present disclosure will describe at least two methods that decouple the magnetic performance and the mechanical performance of the bridges of rotor laminations. The result may include an improved saliency ratio of the rotor with consequent higher speed and torque capabilities of the rotor.

One method may involve mechanical deformation of outer regions of a rotor by means of compression (indentation), peening, or burnishing. A second method may involve strain hardening via injection molding. Both methods may generate compressive and tensile as well as shear stresses in the electrical steel of a rotor. No method presented here requires the use of a special atmosphere or elevated temperatures. For example, an atmosphere comprising 90% or more nitrogen is not required. In fact, no nitrogen-rich atmosphere of any type is required. Further, the methods described herein may be carried out between 0 degrees and 50 degrees Celsius. More particularly, the methods described herein may be carried out at room temperature. Applying plastic deformation to the electrical steel of the rotor may be a key aspect to locally reduce magnetic permeability and enhance mechanical performance in bridge regions.

### A. Plastic deformation via compression/peening/burnishing

Plastic deformation of bridges may be achieved using compression (indentation), peening, or burnishing.

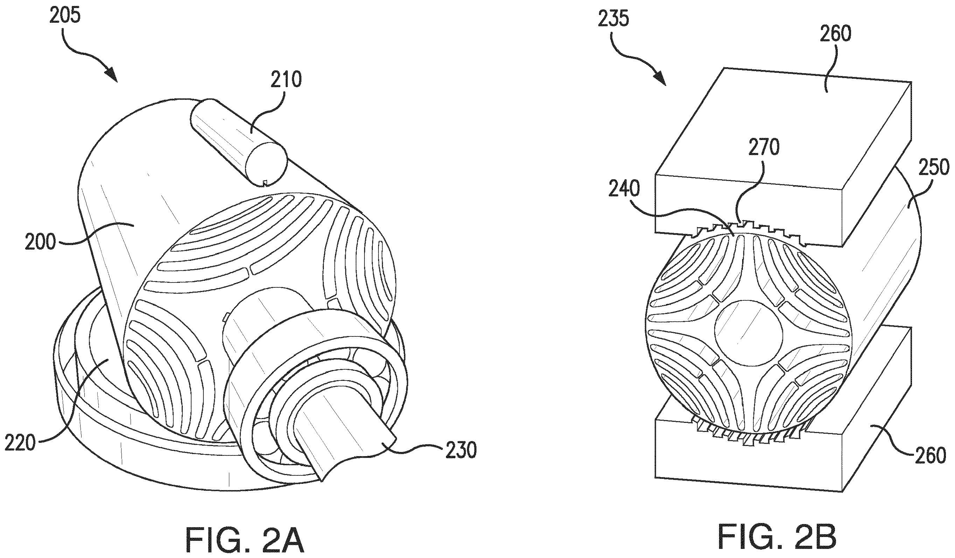

FIG. 2A shows an experimental setup 205 for deforming bridges of a rotor 200. A compression (indentation) system has been experimentally tested combining a hard-steel 4140 pressing die 210 and a universal Instron 5969 dual column testing system. A rotor 200 with injection molded ferrite permanent magnets was positioned between parallel plates 220 and mounted on a shaft 230. Forces of approximately 40-45 kilonewtons (kN) were applied along the one or more bridges in the axial length of the rotor as indicated in FIG. 2A. The resulting pressure during such experiments has been maintained between the yield strength (approximately 350 megapascals (MPa) for M400-50A grade electrical steel) and the ultimate tensile strength (approximately 480 MPa for M400-50A) of the electrical steel. In order to monitor the saliency ratio (given by Iq/Id), the rotor, both before and after experiments, was installed in its respective stator, which has been connected to a source supplying an applied voltage of 30 volts (V) at 60 hertz (Hz). The rotor was rotated (manually and slowly) in order to acquire Iq and Id, which are separated mechanically by 45 degrees.

Some areas of the rotor had "deep" plastic deformation (approximately 0.6 millimeters (mm) depth), whereas in others, a shallow deformation have been achieved. This difference is a consequence of distinct areas (and pressures) applied to the surface of the rotor via a pressing (indentation) die. This test allowed visualization of the dimensional change of the rotor outer region as a function of force/pressure.

Referring to FIG. 2B, an apparatus 235 for deforming bridges 240 of a rotor 250 may comprise one or more pressing (indentation) dies 260. Each pressing (indentation) die 260 may have teeth 270 positioned to allow simultaneous deformation of more than one bridge 240 along the axial length of the rotor 250. Thus, the apparatus 235 may deform multiple bridges 240 on each of multiple laminations, perhaps all the laminations, perhaps all the bridges 240, of the rotor 250 at one time. The deformation will be large enough to reach plastic strains, and there will be residual stresses in the part once the load is removed.

Table 1 lists the direct axis induction (Id), the quadrature axis induction (Iq), and saliency ratio. The order of deformation is shown in FIG. 1. For the tested rotor design, it is observed that the largest influence relies on the deformation of the first and second bridges, which produced an increase of the saliency ratio of approximately 12% over the rotor as manufactured.

**Table 1 - Rotor condition, lowest current, highest current, and respective saliency ratio of the synchronous reluctance rotor evaluated under given voltage (frequency and amplitude).**

| **Rotor condition** | **I_{d}^{∗}** | **I_{q}^{∗}** | **Saliency ratio^{∗}** |
|---|---|---|---|
| As manufactured | 2.04 | 10.71 | 5.25 |
| 1st deformed | 2.07 | 11.45 | 5.53 |
| 1st + 2nd bridges deformed | 1.95 | 11.45 | 5.87 |
| 1st + 2nd + 3rd bridges deformed | 2.19 | 12.18 | 5.56 |
| 1st + 2nd +3rd + 4th bridges deformed | 2.19 | 12.19 | 5.56 |

| | | | |
|---|---|---|---|
| ^{∗} Measurements collected from a single pole, and not necessarily the same one for all measurements. | | | |

In addition to the process described in the above experiment, alternative processes may be used to deform the rotor at the bridges. For example, deformation may be achieved by mechanical means such as shot peening or low plasticity burnishing. Deformation may also be achieved with laser peening.

### B. Strain hardening via injection molding

Currently rotor laminations may be designed so that the laminations are punched to their desired final shape. That is, there may be no subsequent cold or hot forming process applied to the rotor lamination (with the possible exception of turning the outer diameter of the lamination). This approach may result in isotropic material characteristics. However, it may be preferable to have anisotropic material characteristics and to decouple magnetic and mechanical properties in the bridges.

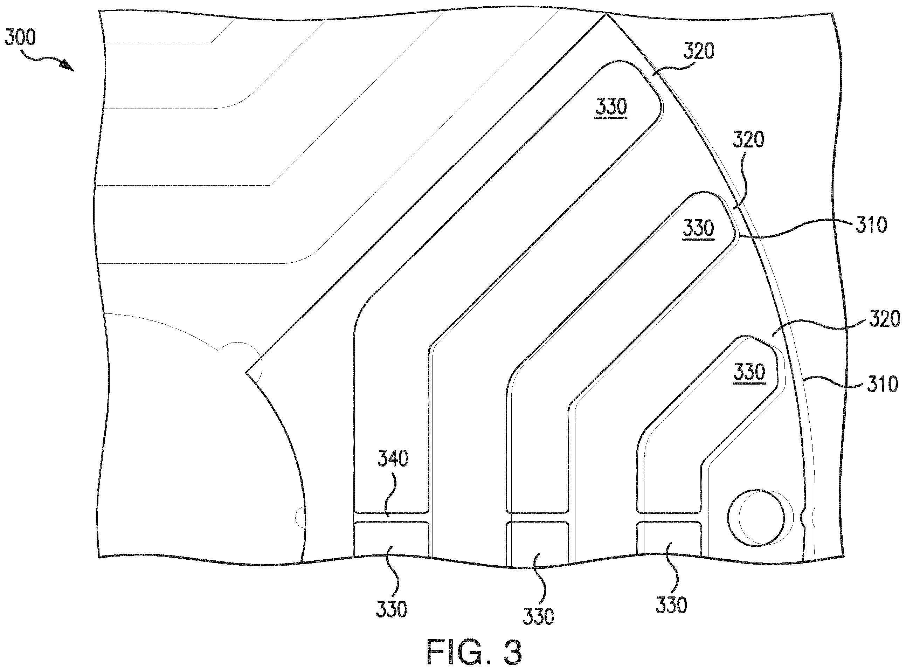

FIG. 3 shows slightly more than an octant 300 of a lamination formed with an initial perimeter that is not round. Lines 310 indicate the position of features in a lamination that has a round (or circular) perimeter. In order to generate anisotropic material characteristics and to decouple the magnetic and mechanical properties in the bridges 320, a rotor may be designed such that each magnetic flux barrier, that is, each cavity 330, is undersized from its nominal value so that the rotor is not initially round. It is important to note that the cavities 330 may be empty, but the cavities 330 may also be partially or entirely filled with ferrimagnetic material such as ferrite, ferromagnetic material such as Neodymium Iron Boron (Nd-Fe-B), or with a mixture of ferrimagnetic material or ferromagnetic material with a bonding agent such as a polymer, for example, a nylon binder. The rotor may then be deformed during injection molding so each magnetic flux barrier 330 assumes the appropriate thickness. This approach may have the simultaneous effect of strain-hardening bridges 320 and webs 340 and decreasing the magnetic penalty of these bridges and webs. The webs 340 may also be strain hardened with this approach. This outcome would result in a more mechanically robust rotor with an increased inductance anisotropy. The resultant rotor and lamination would be essentially round after the deformation process. This process could be accomplished via mechanical forming or hydroforming. With hydroforming, a specialized type of die forming, a high pressure hydraulic fluid is used to press room temperature working material into a die. If, for example, the rotor uses injection molding to insert polymer bonded magnet material, the injection pressure may be utilized to deform the rotor.

In order to validate the claims on mechanical performance, simulations were performed with two separate rotor geometries: (1) a round lamination with 1 mm webs and (2) a similar lamination where the webs are shortened by 5% of their length. For this study, it has been assumed that the internal cavities are subjected to a pressure of 4,000 pounds per square inch (psi), which is uniformly distributed in the cavities (for example, due to injection molding, which, can achieve pressures of the order of 10,000 psi) and is contained by a cylindrical steel cavity of the desired final diameter. Both the plain rotor and the formed rotor are then subjected to a simulated speed ramp of 0 to 5,000 back to 0 to 6,000 and back to 0 revolutions per minute (rpm). Results are shown for the second ramp (0 to 6,000 rpm). In both cases, the material under consideration is annealed electrical steel and the model is a multilinear kinematic hardening model based on tensile test data. Another feasible model that can be fitted to the tensile test data in the plastic regime is of parabolic form with a strain hardening coefficient and a strength coefficient.

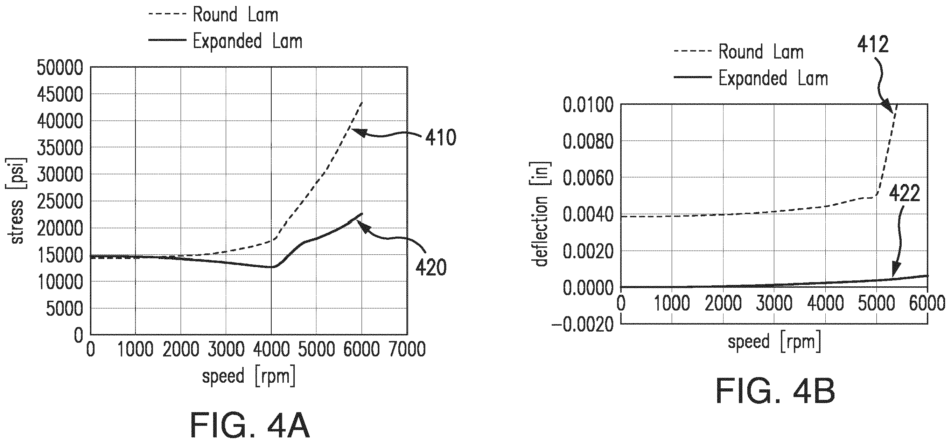

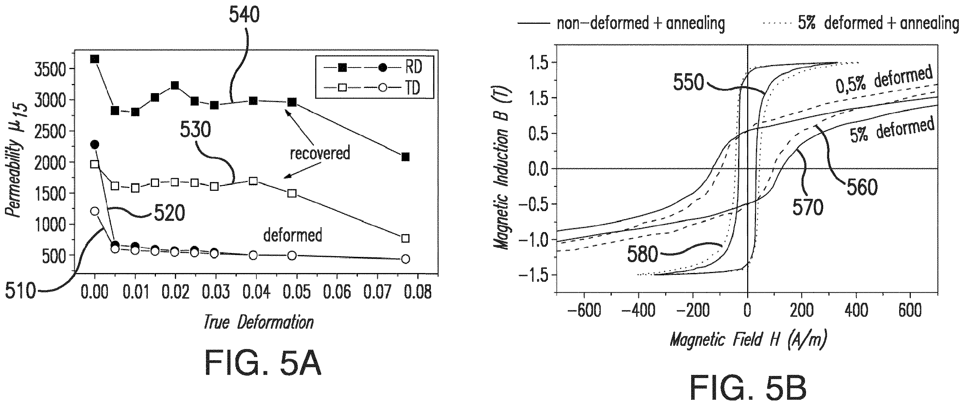

The mechanical anisotropy produced by the methods described herein may add significant mechanical safety factor as indicated in FIGS. 4A and 4B relative to a rotor with the same bridge and web thickness but without strain hardening. In steady state, mechanical safety factor may be defined as the yield strength divided by the maximum characteristic stress. Herein, the characteristic stress may be von Mises stress, but Tresca, hoop, and tensile stresses are also possible. For alternating stresses, one may define the mechanical safety factor as the fatigue limit divided by the stress amplitude given a mean stress. FIGS. 4A and 4B show the results of finite element analysis of a conventional rotor 410 and a strain-hardened rotor 420. In FIG. 4A, von Mises stress is shown as a function of rotational speed. In FIG. 4A, both the conventional (round) rotor 410 and the strain-hardened (expanded) rotor 420 have an initial stress state with peak stresses of approximately 15 kilopounds per square inch (kpsi). Note that the strain-hardened rotor 420 has significant plastic strain of 3-5% localized in every bridge and web while the conventional lamination 410 has plastic strain concentrated in only the deepest of the webs with a value of about 1.5%. The retained (residual) plastic strain in the strain-hardened rotor may result in decreased magnetic performance in these regions, as demonstrated in the material perspective exemplified in FIGS. 5A and 5B as discussed below. Note that FIG. 5A indicates that the relative permeability of the deformed lamination is decreased from approximately 3,000 to approximately 500 while FIG. 5B indicates that the deformed material saturates at lower values of magnetic flux. Thus, unwanted magnetic properties in bridges and webs may be reduced by plastically deforming the lamination material in those regions.

Moreover, FIG. 4A shows that as the speed is ramped the strain-hardened rotor 420 may initially stress relieve while the conventional rotor 410 may continue to increase in stress up to the shake-down speed of 4000 rpm. FIG. 4B presents radial deflection of a conventional lamination 412 and a strain-hardened lamination 422. FIG. 4B shows that the conventional rotor 412 may have a 0.004 inch (0.10 mm) initial deformation due to the first over-speed, while the strain-hardened rotor 422 is initially round. From FIG. 4B one may also observe that the conventionally processed rotor 412 exhibits unrestrained deformation at approximately 5000 rpm while the strain-hardened rotor 422 may still have limited deformation at 6000 rpm. It is anticipated that the mechanical and magnetic properties of the rotor after strain-hardening can be optimized by geometry optimization and processing of the rotor, and it is worth noting that strain-hardening the rotor may have a slight positive impact on the endurance stress limit of the lamination material.

If this lamination is used for rotors with polymer bonded magnets (or neat resin) then no additional processing step maybe required for strain hardening the rotor. Strain hardening may be accomplished by utilizing the injection pressure to deform the rotor laminations. If the rotor is produced via mechanical forming, the laminations may be stamped and then formed by adding an additional mechanical processing step.

FIG. 5A shows permeability as a function of true deformation at 1.5 tesla (T) of deformed 510, 520 and recovered 530, 540 electrical steel in rolling 520, 540 and transverse 510, 530 directions. FIG. 5B shows hysteresis curves of magnetic induction as a function of magnetic field for electrical steel that is non-deformed 550, 0.5% deformed 560, and 5% deformed before 570 and after 580 annealing. The samples refer to 2.2% silicon, fully processed electrical steel with a 0.485 mm thickness. Data from work by P.B. Reddy et al. (2017).

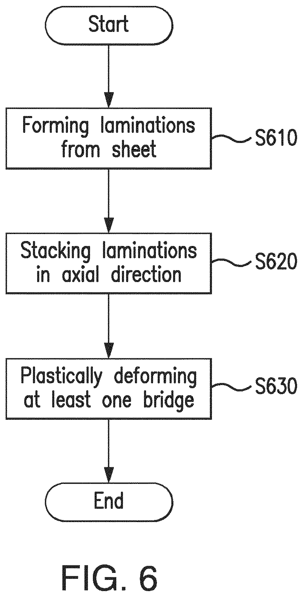

FIG. 6 presents a flowchart for one or more methods of increasing a saliency ratio of a rotor of a synchronous reluctance motor by modifying at least one mechanical property and at least one magnetic property of at least one region of the rotor according to one or more embodiments of the present disclosure. The rotor may comprise a stack of a plurality of laminations, the laminations stacked in an axial direction of the rotor. Each lamination may comprise two parallel surfaces and a perimeter that define the lamination, where the parallel surfaces may be perpendicular to an axial direction of the rotor, and at least the perimeter of each lamination is identical to the perimeter of every other lamination. The lamination may be at least partially filled with a first material comprising a magnetically soft electrical conductor and at least one cavity encircled by the first material and extending from a first surface of the two parallel surfaces to a second surface of the two parallel surfaces, for example, a top and a bottom surface. The first material may form at least one bridge at the perimeter of the lamination from one side of the at least one cavity to another (opposite) side of the at least one cavity.

One or more methods may include forming the laminations of the plurality of laminations from at least one sheet of the first material (S610). For example, the first material may be electrical steel in sheet form. The laminations may be formed by punching the initial shape of the lamination into the sheet. The methods may, perhaps subsequently, stack the laminations in the axial direction of the rotor (S620). The stacking may involve placing a bottom parallel surface of one lamination on top of a top parallel surface of an adjacent lamination. The methods may further include, perhaps subsequent to stacking, plastically deforming the at least one bridge in each lamination of at least two laminations of the plurality of laminations by applying compressive force simultaneously to the at least one bridge in each lamination of the at least two laminations (S630). The applied compressive force may generate a stress that is greater than or equal to a yield strength of the first material and may be less than or equal to an ultimate tensile strength of the first material.

In one or more embodiments, plastically deforming may include pressing externally on the perimeter of each lamination of the at least two laminations in a location of the at least one bridge. Pressing externally may include applying an external tool that simultaneously plastically deforms a plurality of the bridges of each lamination of the at least two laminations.

In one or more embodiments, plastically deforming may include strain hardening. The strain hardening may be by injection molding a second material comprising ferrimagnetic or ferromagnetic material or neat (or compounded) polymers into the at least one cavity in each lamination of the at least two laminations. Each lamination of the at least two laminations may include at least one pair of cavities with a web of the first material traversing between the at least one pair of cavities, and plastically deforming the at least one bridge may also plastically deform the web.

In one or more of the methods, forming the laminations may include forming the laminations with a non-circular cross-section in a plane parallel to either the first or the second surface the perimeter of each lamination and plastically deforming may include converting the non-circular cross-section to a circular cross-section.

Further, one or more methods may further include providing, throughout the method, an environment comprising an ambient temperature less than 50 degrees Celsius and a non-nitrogen-rich atmosphere.

In one or more methods, plastically deforming may further include applying compressive stress simultaneously to the at least one bridge in every lamination.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A rotor of a synchronous reluctance motor, the rotor comprising:
a plurality of laminations forming a stack, each lamination comprising:
two parallel surfaces and a perimeter that define the lamination and a direction of stacking the plurality of laminations that is perpendicular to the two parallel surfaces,
the lamination being at least partially filled with a first material comprising a magnetically soft electrical conductor and at least one cavity encircled by the first material and extending from a first surface of the two parallel surfaces to a second surface of the two parallel surfaces,
the first material forming at least one bridge at the perimeter of the lamination from one side of the at least one cavity to another side of the at least one cavity, wherein:
a value of a magnetic property of the at least one bridge differs from a value of the magnetic property of a remainder of the first material, and
a value of a mechanical property of the at least one bridge differs from a value of the mechanical property of the remainder of the first material.

2. The rotor of claim 1, wherein the at least one bridge is plastically deformed.

3. The rotor of claim 1, wherein:
the magnetic property is magnetic permeability and the magnetic permeability of the at least one bridge is less than the magnetic permeability of the remainder of the first material, and
the mechanical property is yield strength and the yield strength of the at least one bridge is greater than the yield strength of the remainder of the first material.

4. The rotor of claim 1, wherein the at least one cavity is at least partially filled with a second material that comprises ferrimagnetic material, ferromagnetic material, or a neat polymer.

5. The rotor of claim 4, wherein the second material comprises at least one hard magnetic material.

6. The rotor of claim 5, wherein the at least one hard magnetic material comprises ferrite.

7. The rotor of claim 4, wherein the second material further comprises polymer that forms a mixture with the ferrimagnetic material or ferromagnetic material.

8. The rotor of claim 1, wherein the at least one cavity comprises at least one pair of cavities with a web of the first material traversing between the at least one pair of cavities.

9. The rotor of claim 1, wherein each lamination of the plurality of laminations is identical to every other lamination of the plurality of laminations.

10. The rotor of claim 1, wherein the first material comprises at least one of a group consisting of electrical steel and alloys of the type Fe-Si, Fe-Ni, Fe-Co, Fe-Co-V, Fe-Ni-Si, Fe-P, and Fe-Si-P.

11. The rotor of claim 1, wherein the first material comprises greater than 0.05 weight percent carbon and less than or equal to 0.4 weight percent nitrogen.

12. The rotor of claim 11, wherein the first material comprises less than or equal to 0.1 weight percent nitrogen.

13. The rotor of claim 9, wherein the rotor comprises a plurality of stripes on an outer surface of the rotor, each stripe parallel to an axial direction of rotation of the rotor, step-skew, or helically skewed, and each stripe aligned coinciding with an adjacent bridge of the at least one bridge.

14. A method of increasing a saliency ratio of a rotor of a synchronous reluctance motor by modifying at least one mechanical property and at least one magnetic property of at least one region of the rotor, the rotor comprising a stack of a plurality of laminations, the laminations stacked in an axial direction of the rotor,
each lamination comprising:
two parallel surfaces and a perimeter that define the lamination, the parallel surfaces being perpendicular to an axial direction of the rotor, and at least the perimeter of each lamination is identical to the perimeter of every other lamination;
the lamination being at least partially filled with a first material comprising a magnetically soft electrical conductor and at least one cavity encircled by the first material and extending from a first surface of the two parallel surfaces to a second surface of the two parallel surfaces,
the first material forming at least one bridge at the perimeter of the lamination from one side of the at least one cavity to another side of the at least one cavity,
the method comprising:
forming the laminations of the plurality of laminations from at least one sheet of the first material;
stacking the laminations in the axial direction of the rotor; and
plastically deforming the at least one bridge in each lamination of at least two laminations of the plurality of laminations by applying compressive stress simultaneously to the at least one bridge in each lamination of the at least two laminations,
wherein the applied compressive stress is greater than or equal to a yield strength of the first material and less than or equal to an ultimate tensile strength of the first material.

15. The method of claim 14, wherein plastically deforming comprises pressing externally on the perimeter of each lamination of the at least two laminations in a location of the at least one bridge.

16. The method of claim 15, wherein pressing externally comprises applying an external tool that simultaneously plastically deforms a plurality of the bridges of each lamination of the at least two laminations.

17. The method of claim 15, wherein pressing externally is accomplished by at least one of a group consisting of shot peening, burnishing, and laser peening.

18. The method of claim 14, wherein plastically deforming comprises strain hardening, by injection molding a second material comprising ferrimagnetic material or ferromagnetic material into the at least one cavity in each lamination of the at least two laminations.
